# FASCICULE DE BREVET EUROPEEN

(11) **EP 0 731 554 B1**
(45) Date de publication et mention de la délivrance du brevet: **04.08.1999**
(21) Numéro de dépôt: 96400473.3
(22) Date de dépôt: 06.03.1996
(51) Int. Cl.: H02M 7/48, H02M 3/07

(54) **Dispositif électronique de conversion de l'énergie électrique**
Elektronische Vorrichtung zur elektrischen Energieumwandlung
Electronic device for converting electrical energy

(30) Priorité: 10.03.1995 FR 9502818
(43) Date de publication de la demande: 11.09.1996
(73) Titulaire: GEC ALSTHOM TRANSPORT SA, 75016 Paris (FR)
(72) Inventeur: Meynard, Thierry, 31500 Toulouse (FR); Gonzales, Juan, 78730 St Arnoulten Yvelines (FR); Lavieville, Jean-Paul, 91190 Gif sur Yvette (FR); Bethoux, Olivier, 91460 Marcoussis (FR); Carrere, Philippe, 91460 Marcoussis (FR)
(74) Mandataire: Gosse, Michel

(56) Documents cités:
- WO-A-93/02501

## Description

La présente invention concerne les dispositifs électroniques de conversion de l'énergie électrique du type décrit dans la demande de brevet FR - 2 679 715 A1 et une installation d'alimentation en faisant usage.

Le convertisseur décrit dans cette demande de brevet est illustré, à titre d'exemple, par la figure 1 ci-annexée. Il comprend essentiellement, entre une source de tension SE et une source de courant C, une pluralité de cellules de commutation commandables CL1, CL2..., CLn, chacune ayant deux interrupteurs T1, T'1; T2, T'2...; Tn, T'n, avec un pôle de chacun des deux interrupteurs constituant une paire de pôles amont et l'autre pôle de chacun des interrupteurs constituant une paire de pôles aval, la paire de pôles aval d'une cellule amont étant connectée à la paire de pôles amont d'une cellule aval et la paire de pôles amont d'une première cellule CL1 étant connectée à ladite source de courant C, tandis que la paire de pôles aval d'une dernière cellule CLn est connectée à ladite source de tension SE, ce convertisseur comprenant encore un condensateur C1, C2..., Cn, pour chaque cellule, sauf que celui de la dernière peut être omis quand ladite source de tension SE est apte à en jouer le rôle, connecté entre les deux pôles de la paire de pôles aval de la cellule, ainsi que des moyens de commande (non représentés) régissant le fonctionnement nominal du convertisseur en agissant sur les interrupteurs des cellules successives de sorte que les deux interrupteurs d'une même cellule soient toujours respectivement dans des états de conduction opposés (ce qui est illustré par des liaisons de commande telles que lc1), de sorte que, en réponse à un signal de commande de cellule fourni par lesdits moyens de commande, l'un des deux interrupteurs d'une même cellule soit successivement dans un premier état de conduction, puis dans un second état de conduction durant une période de convertisseur cycliquement répétée, et de sorte que, en réponse à des signaux de commande de cellules identiques mais décalés dans le temps d'une fraction de ladite période de convertisseur, les interrupteurs des cellules successives aient respectivement le même fonctionnement, mais décalé dans le temps de ladite fraction de période.

De préférence, ladite fraction de période est égale à l'inverse du nombre n de cellules, soit 2π/n, ce qui est optimal en ce qui concerne les harmoniques engendrées sur la sortie et permet un équilibrage naturel des tensions de charge des condensateurs du convertisseur. Un autre décalage est cependant concevable, de même que des décalages différents entre les divers étages.

Dans un tel convertisseur, les condensateurs successifs C1, C2..., Cn ont des tensions de charge moyennes respectivement croissantes, la tension de charge moyenne du condensateur associé à chacune desdites cellules étant égale au produit d'une tension VE issue de ladite source de tension SE, de l'inverse du nombre de cellules du convertisseur et du rang de la cellule, soit VE/3, 2VE/3, VE, lorsque n = 3, c'est-à-dire lorsque le convertisseur a trois cellules seulement.

Bien entendu, ce qui précède s'applique pour d'autres valeurs de n, du moment qu'il y en a deux au moins, pour plus de trois cellules en particulier.

Dans ce qui suit on dénommera convertisseur multiniveaux un convertisseur répondant à la description qui précède.

L'objet de la présente invention est de faire en sorte que, dans un tel convertisseur multiniveaux, la charge de chaque condensateur reste conforme à ce qui vient d'être indiqué, malgré les inévitables déviations par rapport aux conditions nominales de fonctionnement.

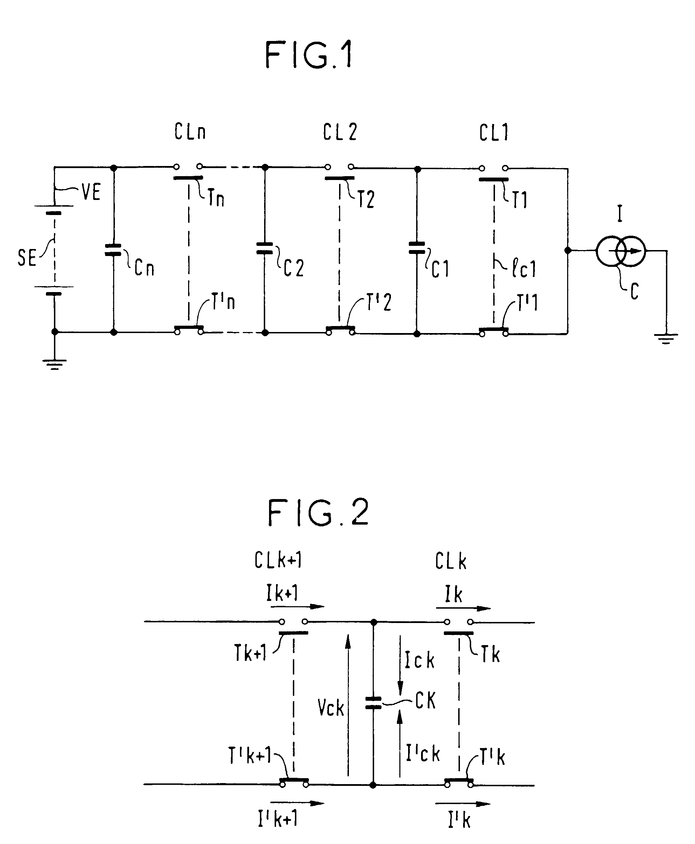

Pour examiner plus facilement comment doit nominalement évoluer la charge d'un des condensateurs d'un convertisseur multiniveaux conforme à ce qui précède, on se référera à la figure 2 qui représente une cellule de commutation quelconque CLk, avec ses interrupteurs Tk, T'k, le condensateur Ck associé à cette cellule, ainsi que la cellule suivante CLk+1, avec ses interrupteurs Tk+1, T'k+1.

Compte tenu du couplage entre les interrupteurs de chaque cellule, Tk, T'k ; Tk+1, T'k+1, l'ensemble de deux cellules imbriquées Tk-Tk+1 représenté à la figure 2 possède quatre états :
a) un premier état où, Tk et Tk+1 étant bloqués, la tension de charge de Ck n'évolue pas ;
b) un deuxième état où, Tk et Tk+1 étant conducteurs, la tension de charge de Ck n'évolue pas non plus, parce qu'alors T'k et T'k+1 sont bloqués ;
c) un troisième état où, Tk étant conducteur et Tk+1 bloqué, la source de courant C impose un courant Ik égal à I à travers Tk, alors que le courant I'k vers T'k est nul. L'état de Tk+1 impose un courant Ik+1 nul, alors que le courant I'k+1 est égal à I, tandis que le courant I'ck dans le condensateur Ck est égal à I ;
d) un quatrième état où, Tk étant bloqué et Tk+1 conducteur, la source de courant C impose un courant I'k+1 égal à I à travers T'k, alors que le courant Ik à travers Tk est nul. L'état de Tk+1 impose un courant Ik+1 égal à I, alors que le courant I'k+1 est nul, tandis que le courant Ick dans le condensateur Ck est égal à I.

Les courants I'ck = I'k+1 et Ick = Ik+1 apportent au condensateur Ck des charges additionnelles opposées, dans les troisième et quatrième états ci-dessus ; on dira que les premières sont négatives et les secondes positives. Les courants correspondant à ces deux états sont imposés par la source de courant. Si la source de courant est rigoureusement continue, toutes choses égales par ailleurs, les courants imposés par la source de courant dans les phases c) et d) sont les mêmes et de sens opposés, à tout instant, au long des intervalles de conduction de Tk et Tk+1 (nominalement égaux et décalés dans le temps, comme indiqué plus haut). Cela entraîne que la charge de Ck, modifiée négativement puis positivement de quantités égales, ne varie pas au cours d'une période de convertisseur.

Dans un système idéal (source de courant parfaite, impédance infinie), les courants Ick et I'ck sont déterminés par la source de courant. De manière plus concrète, lorsque l'impédance de la source de courant n'est pas infinie, le courant de la source de courant dépend de la tension à ses bornes et donc des tensions Vck des condensateurs. S'il advient que la tension de charge Vck soit, par exemple, trop élevée, par rapport à sa valeur nominale VE.k/n, quelle qu'en soit la raison, il en résultera un courant de décharge I'ck tendant à être plus fort et un courant de charge Ick tendant à être plus faible que ce qu'ils seraient nominalement, ce qui tendra à ramener la charge du condensateur Ck à ce qu'elle devrait être. Ceci explique que le fonctionnement du convertisseur multiniveaux soit stable et permette des variations d'amplitude, dans les deux sens, tant du côté de la source de tension que du côté de la source de courant. On verra par la suite que cela soulève néanmoins des problèmes en termes de dynamique.

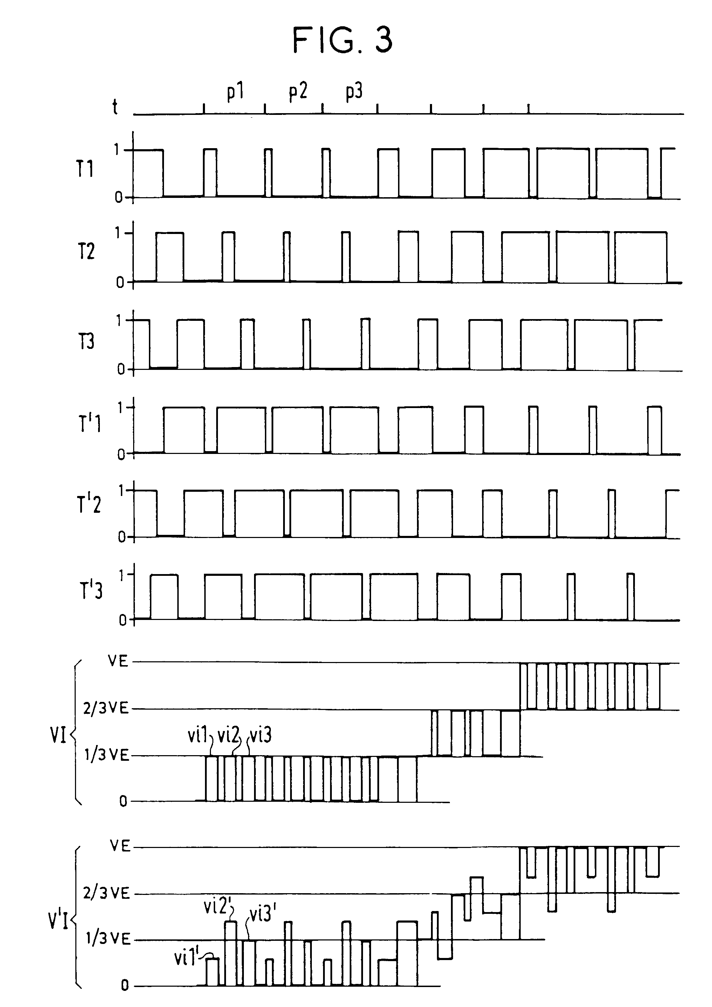

La figure 3 donne un exemple de fonctionnement du convertisseur multiniveaux conforme aux figures 1 et 2, dans le cas où n = 3 ; on y applique une commande du type de la modulation PWM, en vue de la fourniture à la source de courant C d'une tension alternative modulée sinusoïdalement, c'est-à-dire que, durant des périodes successives p1, p2, p3... de fonctionnement du convertisseur (ligne t), les interrupteurs T1, T2, T3 sont successivement conducteurs pendant des intervalles de durée variant selon une onde de modulation de la tension de sortie, dite ci-après modulante. Les interrupteurs correspondants T'1, T'2, T'3 sont à chaque instant dans la position opposée.

Bien entendu d'autres modes de modulation du fonctionnement des interrupteurs permettent, comme il est bien connu, d'obtenir le même résultat. Bien entendu encore, le convertisseur peut tout aussi bien servir à fournir à la source de courant C toute autre forme d'onde ou une tension continue régulée.

On considérera d'abord une période p1 de fonctionnement du convertisseur. Au cours de celle-ci, lorsque l'un des interrupteurs T1, T2, T3 est conducteur, les deux autres sont bloqués ; pour chaque ensemble de deux cellules et le condensateur compris entre elles, cela correspond aux états c) et d) décrits plus haut, dans lesquels le condensateur reçoit successivement des charges additionnelles négatives et des charges additionnelles positives, dont la valeur totale est nominalement nulle. On remarquera de plus que, lorsque les cellules imbriquées CL1-CL2 sont dans l'état d), les cellules imbriquées CL2-CL3 sont dans l'état c), de sorte que le condensateur C1 reçoit des charges additionnelles positives par le même courant qui fournit des charges additionnelles négatives au condensateur C2.

La figure 3 illustre additionnellement et à titre d'exemple le fonctionnement du convertisseur multiniveaux dans des périodes p2, p3, etc..., au cours desquelles les durées de conduction des interrupteurs T1, T2, T3 se raccourcissent, puis s'allongent jusqu'à dépasser 1/3 de période, se recouvrant alors. La ligne VI représente ce que serait idéalement la tension transmise à la source de courant, notamment si les condensateurs avaient une capacité telle que les charges additionnelles considérées ne modifiaient sensiblement pas la tension à leurs bornes. La tension VI est exprimée en fractions de la tension VE de la source de tension SE, en prenant comme référence de tension le pôle négatif de la source de tension SE. On voit que cette tension VI contient, d'une part, un fondamental important à la fréquence de la modulante et, d'autre part, des harmoniques d'amplitudes plus faibles à des fréquences supérieures à la fréquence de découpage, qui peuvent être facilement éliminées par un filtre passe-bas. Ce courant étant variable, son intégration par un élément inductif quelconque contenu dans la source de courant mène à ce que le convertisseur fournisse à la source de courant un courant alternatif d'allure sinusoïdale dont la période est égale à celle du fondamental de la tension de sortie.

Le courant variant sinusoïdalement, les états c) et d) envisagés plus haut n'apporteront pas des charges additionnelles égales aux condensateurs du convertisseur, puisqu'entre ces deux états, le courant aura eu le temps de varier. Cette variation ne sera négligeable que si la période de fonctionnement des interrupteurs est nettement supérieure à la fréquence de la modulante.

Par ailleurs, il faut s'attendre à ce que le courant alternatif fourni à la source de courant ne soit pas strictement sinusoïdal, mais distordu de façon asymétrique. De même, des écarts de niveaux dans les signaux de commande ou dans les signaux les engendrant, ou encore les différences de temps de commutation entre les divers interrupteurs traversés, rendront inévitablement inégales les durées de conduction des interrupteurs sur une période de fonctionnement du convertisseur, ou décaleront dans le temps les phases de conduction des interrupteurs, ou encore déséquilibreront les courants de charge et de décharge des condensateurs. D'une manière générale, par conséquent, on ne peut garantir en pratique, dans un convertisseur multiniveaux du type décrit, le respect des conditions nominales de fonctionnement, telles qu'elles ont été initialement décrites. Or, un écart de charge additionnelle persistant conduit à un écart dans un sens ou dans l'autre de la charge d'un condensateur, donc de sa tension de charge moyenne, donc aussi à une distorsion, à la fréquence de fonctionnement du convertisseur, de la tension fournie à la source de courant.

Cet effet est illustré par le tracé VI' de la figure 3, qui est semblable au tracé VI, à cela près que, le condensateur C1 (figure 1) étant supposé chargé sous une tension plus faible que sa tension de charge nominale, au lieu de fournir des impulsions vi1, vi2, vi3 d'amplitude constante, le convertisseur fournit des impulsions telles que vi1' d'amplitude réduite (l'échelle est exagérée pour une meilleure lisibilité), lorsque le condensateur C1 fournit à la source de courant C sa propre tension de charge, et des impulsions telles que vi2' d'amplitude accrue, lorsque le condensateur C1 soustrait sa propre de tension de celle qui est fournie à la source de courant C, ainsi que des impulsions telles que vi3' d'amplitude inchangée, lorsque le condensateur C1 est hors circuit. On voit aisément que, dans le signal VI', cela apporte une composante perturbatrice à ladite fréquence de découpage du convertisseur.

Une telle composante perturbatrice n'existe pas quand les condensateurs sont chargés à leurs tensions nominales respectives. Lorsqu'elle apparaît, elle est généralement nuisible.

Mais, surtout, les tensions auxquelles sont soumis les interrupteurs ne seront alors plus sensiblement égales à la différence des tensions de charge nominales de deux condensateurs adjacents, c'est-à-dire à la valeur de la tension de la source de tension divisée par le nombre d'étages du convertisseur. Cela peut mettre en danger ces interrupteurs.

Bien entendu, comme mentionné précédemment, les écarts de charge des condensateurs tendent spontanément à se résorber, mais ce processus prend du temps.

Par ailleurs, ce processus spontané est mis en oeuvre via la source de courant. Il ne peut donc opérer lorsque la source de courant n'impose pas de courant et, en tout cas, sera ralenti lorsque le courant de la source de courant est réduit.

La présente invention, à partir de ces constatations, propose un convertisseur multiniveaux dans lequel est mieux assuré le maintien de la charge moyenne de chacun des condensateurs du convertisseur à sa valeur nominale.

Selon l'invention, le convertisseur multiniveaux comprend des moyens pour constater, pour chacun desdits condensateurs, un écart éventuel entre la tension de charge moyenne évaluée et la tension de charge moyenne nominale de ce condensateur, ainsi que des moyens de commande complémentaires modifiant la durée dudit premier état de conduction de la cellule associée audit condensateur dans un sens tel que ledit écart constaté soit réduit.

Selon une forme de mise en oeuvre de l'invention, lesdits moyens de constation d'écart comprennent chacun des moyens pour recevoir la valeur de la tension de la source de tension, une grandeur de modulation déterminant une forme d'onde de tension à appliquer à ladite source de courant, le rang de l'étage et le nombre d'étages, pour déterminer ce que doit être en conséquence la tension de charge nominale de chaque condensateur dans une période de fonctionnement du convertisseur, ledit écart étant alors constaté, pour chaque condensateur du convertisseur, par des moyens de comparaison soustrayant ladite tension moyenne évaluée aux bornes de chaque condensateur de ladite tension de charge nominale des condensateurs.

Selon une première forme de mise en oeuvre de l'invention, lesdits moyens d'évaluation de la tension aux bornes de chaque condensateur comprennent un réseau voltmétrique connecté entre les deux bornes du condensateur.

Selon une variante, lesdits moyens d'évaluation de la tension aux bornes de chaque condensateur comprennent un réseau voltmétrique connecté entre les deux bornes d'un interrupteur de chaque cellule.

Selon une autre variante, lesdits moyens d'évaluation de la tension aux bornes de chaque condensateur comprennent un réseau voltmétrique connecté entre les deux bornes de la source de courant.

De préférence, chacun desdits moyens de commande complémentaires reçoit, outre ledit signal d'écart, une mesure du courant imposé par ladite souce de courant et une constante exprimant la capacité d'un desdits condensateurs qui lui est associé, et calcule en conséquence une modification de la durée dudit premier état de conduction de la cellule associée à ce condensateur telle qu'elle engendre dans ce condensateur une charge compensant ledit écart de charge.

De préférence encore, chacun desdits moyens de commande complémentaires reçoit aussi un signal de modulation et modifie en conséquence la durée dudit premier état de conduction de la cellule associée à ce condensateur, de sorte que, tous lesdits moyens de commande complémentaires agissant de même, ladite source de courant reçoive une tension moyenne modulée selon ledit signal de modulation.

De préférence enfin, chacun desdits moyens de commande complémentaires reçoit d'un moyen de commande complémentaire voisin un signal de modification établi dans ce dernier et définissant une modification que ce moyen de commande complémentaire voisin apporte à ladite durée dudit premier état de conduction de la cellule qui lui est associée, afin que ledit moyen de commande complémentaire considéré modifie en conséquence ladite durée dudit premier état de conduction de la cellule qui lui est propre, dans un sens qui compense pour le condensateur associé à cette dernière cellule l'effet de ladite modification apportée dans la cellule voisine.

Les différents objets et caractéristiques de la présente invention apparaîtront plus clairement dans la description qui va suivre de modes de mise oeuvre de l'invention, donnée à titre d'exemple non limitatif, en se reportant aux figures annexées qui représentent :
- la figure 1, déjà décrite, le schéma de principe d'un convertisseur multiniveaux connu
- la figure 2, déjà décrite, le schéma de principe d'un ensemble de deux étages imbriqués du convertisseur multiniveaux de la figure 1,
- la figure 3, déjà décrite, des formes d'ondes décrivant le fonctionnement du convertisseur multiniveaux des figures 1 et 2, dans le cas où il comprend trois étages,
- la figure 4, le schéma de principe de moyens de commande d'un convertisseur multiniveaux du type des figures 1, 2 et 3, agencés pour permettre la mise en oeuvre de l'invention,
- la figure 5, des courbes illustrant la mise en oeuvre de l'invention, conformément aux dispositions de la figure 4 et à propos d'une cellule de convertisseur multiniveaux quelconque, telle que celle de la figure 2,
- la figure 6, le schéma de principe de moyens d'évaluation de tension de charge de condensateur utilisables dans le dispositif de la figure 4,
- la figure 7, un schéma de principe d'une variante d'une partie des moyens de la figure 4, correspondant au cas où la tension moyenne de charge de chacun des condensateurs du convertisseur multiniveaux est dérivé de la connaissance de la tension aux bornes de chacun des interrupteurs, lorsqu'ils sont ouverts.

On ne reviendra pas sur la description d'un comvertisseur multiniveaux. Les schémas des figures 1, 2 et 3 correspondent à un convertisseur du type décrit dans le document de brevet FR - 2 697 715 A1 auquel le lecteur est renvoyé pour de plus amples détails.

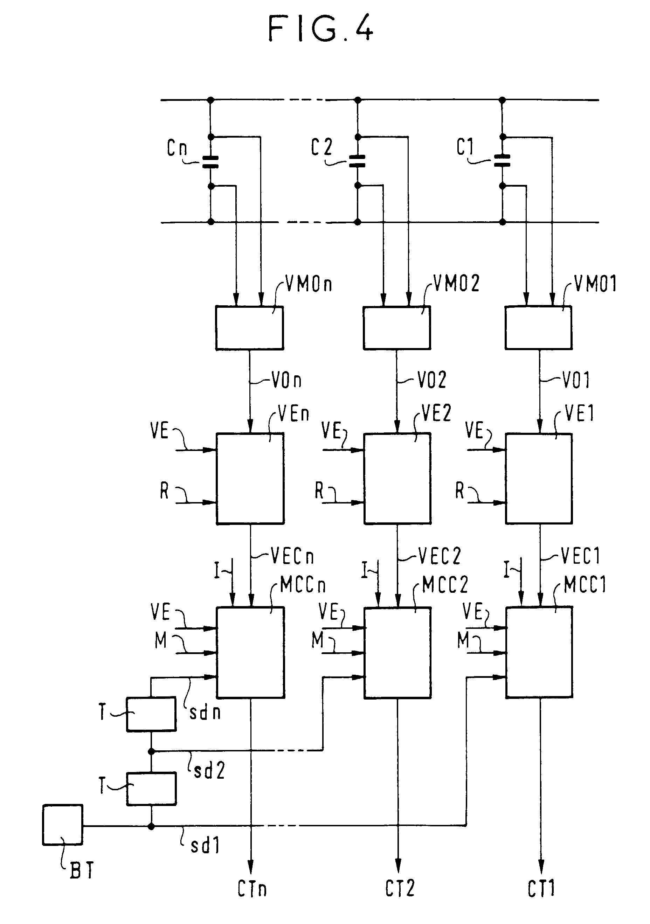

La figure 4 ne représente du convertisseur de la figure 1, que les condensateurs C1, C2..., Cn.

A chacun de ces condensateurs est associé, selon l'invention, un dispositif d'évaluation VMO1, VMO2..., VMOn permettant d'évaluer la tension de charge moyenne de chacun des condensateurs. A cette fin, ce dispositif est couplé aux deux bornes du condensateur. Il fournit un signal d'évaluation VO1, VO2..., VOn exprimant la tension de charge moyenne existant aux bornes du condensateur.

A chacun des condensateurs est également associé, selon l'invention, un dispositif de constation d'écart VE1, VE2..., VEn permettant de constater un écart éventuel entre la tension de charge moyenne observée, qu'il reçoit du dispositif d'évaluation correspondant, et la tension de charge moyenne nominale de ce condensateur. Ce dispositif de constatation d'écart calcule lui-même la tension de charge moyenne nominale de ce condensateur, qui est la fraction 1/n, n étant le nombre d'étages du convertisseur, de la tension VE de la source de tension SE, multipliée par le rang R de l'étage. Ce dispositif reçoit donc la valeur VE, tandis que les valeurs n et R, qui sont des constantes, sont câblées dans chaque dispositif. Ce dernier en dérive la tension de charge moyenne nominale VE.R/n et la compare à la tension de charge moyenne évaluée pour fournir un signal d'écart VEC1, VEC2..., VECn, caractérisant la différence entre ces deux tensions.

Ce signal d'écart est destiné à agir sur des moyens de commande complémentaires inclus dans des modules de commande MCC1, MCC2..., MCCn. Ces modules de commande fonctionnent en réponse à des signaux de déclenchement sd1, sd2..., sdn qui leur sont fournis à chaque période telle que p1 (figure 3) par une base de temps BT, de façon décalée, pour la commande décalée des cellules de commutation du convertisseur, et leur fonction primaire est de produire, au cours de chaque période, une impulsion de commande dont la durée nominale est déterminée par la valeur M du signal de modulation. Lesdits moyens complémentaires des modules de commande MCC1, MCC2..., MCCn apportent secondairement une modification à la longueur de cette impulsion qui dépend de la valeur du signal d'écart VEC1, VEC2..., VECn, ainsi que du courant I imposé par la source de courant. Lesdits moyens complémentaires des modules de commande MCC1, MCC2..., MCCn apportent enfin, de préférence, une modification à la longueur de cette impulsion qui dépend de celle qui est apportée à sa propre impulsion de commande par un module de commande voisin et qui lui est signalée par un signal de modification SM1, SM2..., SMn que produit chacune module de commande MCC1, MCC2..., MCCn. Dans l'exemple de la figure 4, le signal SM1 est produit par le module de commande MCC2, le signal SM2 par un module MCC3 non représenté. On a figuré un signal SMn pour le module de commande MCCn, pour des raisons d'homogénéité, mais il n'existe pas, dans la mesure où il n'existe pas de module de commande MCCn+1. Les signaux résultants CT1, CT2..., CTn commandent l'état des interrupteurs dans les cellules de commutation correspondantes CL1, CL2..., CLn.

Plus précisément, le signal d'écart allongera (ou raccourcira) les états "1" de l'interrupteur correspondant T1, T2..., Tn (voir figure 1). Cet allongement dépendra de l'écart de charge à corriger, mais aussi du courant dans la source de courant I, mesuré par un capteur de courant de type classique inséré en série avec la source de courant, ainsi que de la capacité du condensateur qui est une constante cablée dans le module de commande.

Il dépendra en outre de l'allongement apporté à l'impulsion de commande voisine, en application de ce qui a été expliqué précédemment, à savoir que "le condensateur C1 reçoit des charges additionnelles positives par le même courant qui fournit des charges additionnelles négatives au condensateur C2". Donc, par exemple, l'allongement de l'impulsion de commande CT2, qui rend passant le commutateur T2, et qui charge négativement le condensateur C2, apporte une charge positive additionnelle indésirable au condensateur C1. Cet allongement additionnel est donc indiqué au module de commande MCC1 par le signal SM1 qui est utilisé pour corriger le signal de commande CT1 dans un sens tel que soit corrigée la charge positive additionnelle indésirable mentionnée.

Bien entendu, le sens de telles corrections de proche en proche sera inversé dans les cas où l'influence des variations de charge d'un condensateur sur l'autre a lieu dans l'autre sens.

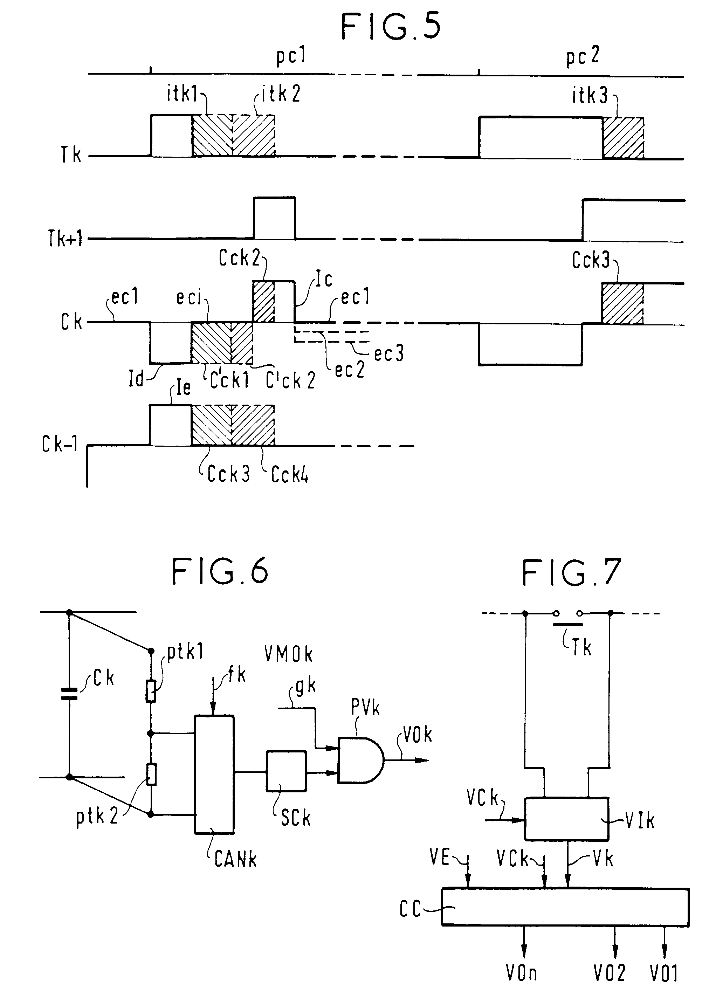

La figure 5 illustre deux cas de fonctionnement d'un ensemble de deux cellules imbriquées telles que celles de la figure 2, pour les sens de courant représentés sur cette figure 2 et représente la charge et la décharge d'un condensateur Ck, par les courbes Ik et Vck du courant dans le condensateur et de la tension à ses bornes. La figure 5 illustre de même le fonctionnement des interrupteurs Tk et Tk+1 des cellules CLk et CLk+1.

Dans la période pc1 de fonctionnement du convertisseur, les impulsions nominales de fermeture des interrupteurs Tk et Tk+1 se produisent successivement, sans recouvrement. L'impulsion Tk, comme on l'a expliqué précédemment, fournit une impulsion de courant Id qui apporte une charge additionnelle négative au condensateur Ck, c'est-à-dire le décharge. Puis l'impulsion Tk+1 fournit une impulsion de courant Ie qui lui apporte une charge additionnelle positive, c'est-à-dire le recharge. La tension Vck, initialement à un niveau ecl, diminue pendant l'impulsion Id, puis remonte pendant l'impulsion Ie, pour retrouver le même niveau ec1.

On a illustré une modification de la longueur de l'impulsion nominale Tk, par allongement de cette impulsion d'un premier intervalle de correction itk1, puis d'un deuxième intervalle de correction itk2.

Dans la mesure où cet intervalle de correction itk1 est plus court que le laps de temps entre les deux impulsions nominales Tk et Tk+1, l'effet est un allongement C'ck1 de la décharge du condensateur Ck, en vue de la correction de l'écart mesuré, que l'on suppose être une charge excessive du condensateur Ck. Il en résulte un allongement de la période de décharge et une réduction corrélative de la tension finalement observée aux bornes du condensateur Ck qui devient ec2, tension inférieure à ec1.

Si la correction s'étend aussi sur le deuxième intervalle de correction itk2, au point que l'impulsion Tk allongée en vient à recouvrir partiellement au moins l'impulsion Tk+1, l'allongement de la décharge comprend toute la durée jusqu'au début de l'impulsion nominale Tk+1. Ensuite, les deux interrupteurs étant fermés ensemble, il se produit un raccourcissement Cck2 de la charge du condensateur Ck, du début de l'impulsion Tk+1, jusqu'au moment où l'impulsion Tk prolongée se termine. Par suite, la tension aux bornes du condensateur Ck devient ec3, tension inférieure à ec2. L'allongement de la décharge et le raccourcissement de la charge agissent donc l'un comme l'autre dans le sens d'une diminution de la charge excessive du condensateur Ck.

Bien entendu, les exemples que l'on vient de décrire n'ont qu'un but démonstratif. Les corrections apportées sont d'une amplitude très grande par rapport aux durées des impulsions nominales des interrupteurs, ce qui ne devrait pas se rencontrer en pratique. Ils ont toutefois permis de discerner clairement ce qui se passe dans le convertisseur, au cours de la correction d'écart de charge, lorsque la fin d'une impulsion nominale Tk d'une cellule CLk s'approche du début de l'impulsion nominale Tk+1 de la cellule suivante et qu'un allongement de l'impulsion nominale Tk ne l'amène pas, ou l'amène au contraire, à recouvrir partiellement au moins l'impulsion nominale Tk+1. On a pu vérifier que la correction opère dans les deux cas.

La figure 5 illustre également, dans une autre période pc2, le mécanisme d'une correction d'une charge excessive du condensateur Ck, dans le cas où les impulsions nominales Tk et Tk+1 se recouvrent partiellement. Comme pour le couple itk2/Cck2 que l'on vient d'examiner, le couple allongement itk3/raccourcissement Cck3 opère la correction désirée.

Il est facile de vérifier qu'une correction de sens opposée, la charge moyenne du condensateur Ck étant insuffisante, se traduit par une diminution de la durée de l'impulsion nominale Tk et apporte de même un accroissement de la charge du condensateur Ck.

Par ailleurs, et selon une variante, la correction des écarts de charge en question peut être prévue, dans un dispositif de commande centralisé réalisant les fonctions de tous les modules de commande MCC1, MCC2..., MCCn, ou dans un dispositif réunissant tous les modules de commande MCC1, MCC2..., MCCn, complétés par des interconnexions et des moyens de coordination entre modules, capable donc de prévoir la ou les corrections initiales à apporter au fonctionnement d'un ou de plusieurs étages du convertisseur, ainsi que les corrections subséquentes correspondantes.

Dans un mode de réalisation simple, un tel dispositif maintiendrait le rapport cyclique du fonctionnement du premier étage d'interrupteurs, par exemple, et corrigerait tout écart observé par modification des rapports cycliques des autres étages, selon ce qui précède. On peut tout aussi bien envisager de maintenir le rapport cyclique du fonctionnement du dernier étage.

Dans ces conditions, l'homme de métier comprendra aisément qu'il est possible, en apportant ainsi une correction d'ensemble affectant tous les étages sauf un, selon le mécanisme décrit plus haut, d'ajuster la dernière commande pour faire en sorte que l'ensemble des corrections n'ait pas d'effet sur la source de courant, la tension fournie à la source de courant restant constante et seule l'énergie prélevée sur la source de tension étant modifiée, par accroissement ou réduction de cette énergie prélevée, puis répartition sur les différents étages grâce au mécanisme de correction que l'on vient de décrire.

De la même façon, la modulation de la tension fournie par le convertisseur à la source de courant peut être obtenue en modulant seulement la charge du condensateur de rang n - 1, le mécanisme de correction que l'on vient de décrire se chargeant ensuite d'aligner les charges des condensateurs de rangs n - 2..., 2, 1 comme il se doit.

Le dispositif décrit dans ce qui précède permet ainsi de moduler les durées de conduction des interrupteurs Tk pour que la tension moyenne de chaque condensateur Ck soit à tout instant la plus proche possible de sa tension de charge nominale.

Cette tension de charge nominale, comme on l'a déjà vu, correspond à une fraction de la tension VE de la source de tension (cf. figure 1) qui dépend du rang k de l'étage considéré.

La tension de charge moyenne du condensateur est donc évaluée de façon cohérente avec ce qui précède, dans un dispositif d'observation VMO1, VMO2..., VMOn, soit VMOk en général.

En se basant sur ce qui précède, et en se reportant à la figure 6, ce dispositif sera composé, selon une forme de mise en oeuvre, d'impédances ptk1 et ptk2, connectées en série entre les bornes du condensateur Ck, et fournissant une fraction déterminée de la tension aux bornes de ce condensateur à un convertisseur analogique-numérique CAN fournissant à chaque impulsion fkn une valeur numérique de tension à un circuit de calcul de moyenne SCk, lequel est lu une fois par cycle du convertisseur, par un circuit de porte PVk déclenché par un signal gk. Les signaux fk et gk seront avantageusement produits par la base de temps BT (figure 4) et leur position dans la période de fonctionnement du convertisseur sera telle que, après m mesures de tension dans la période de fonctionnement du convertisseur et calcul de la moyenne des résultats de cette mesure, la valeur de la tension de charge moyenne observée soit disponible sur la sortie VOk du circuit SCk, une fois par cycle du convertisseur, au moment opportun pour déterminer, dans les modules de commande MMC1, MMC2..., MMCn, la modification décrite en relation avec la figure 4 de la durée de l'état de conduction approprié (conduction de l'interrupteur Tk dans ce qui précède) de la cellule correspondante.

Il est bien évident que la charge moyenne observée du condensateur Ck peut être obtenue par d'autres moyens. Selon une première variante, illustrée par la figure 7, plutôt que de mesurer la tension aux bornes du condensateur Ck, on mesure la tension VE de la source de tension, et la tension entre les bornes d'un des interrupteurs de chaque cellule, afin d'établir, par soustraction, et de proche en proche, la tension de charge moyenne de chacun des condensateurs du convertisseur multiniveaux. C'est ainsi que la figure 7 représente l'un des interrupteurs du convertisseur multiniveaux de la figure 1, Tk, auquel est couplé un circuit d'évaluation de tension VIk, qui peut être conforme à celui de la figure 6, moyennant des adaptations à la portée de l'homme de métier, lequel fournit un signal Vk caractérisant la tension aux bornes de l'interrupteur Tk à un circuit de calcul CC, en même temps que celui-ci reçoit le signal de commande VCk de cet interrupteur Tk, ce qui permet au circuit de calcul de ne prendre en considération les valeurs fournies par le circuit d'évaluation VIk que pendant les périodes où l'interrupteur est bloqué. Le circuit de calcul reçoit directement la tension VE, qui peut être obtenue, elle-aussi, par un circuit tel que celui de la figure 6, judicieusement simplifié, et il opère le calcul soustractif qui fournit les signaux VO1, VO2..., VOn de la figure 4.

Selon une autre variante, qui se déduit aisément de la figure 3, la mesure de l'amplitude des impulsions fournies à la source de courant I représente la tension aux bornes du condensateur qui leur donne naissance ; un seul dispositif tel que celui de la figure 6, connecté aux bornes de la source de courant C, et évaluant la tension en différents points de la courbe VI de la figure 3, au cours de chaque période, telle que pl, voit apparaître des niveaux vi1, vi2, vi3 issus de chacun des condensateurs. L'homme de métier comprendra aisément comment on peut en dériver les signaux VO1, VO2..., VOn de la figure 3 représentant la charge moyenne évaluée de chacun des condensateurs du convertisseur multiniveaux.

Il est bien évident que les descriptions qui précèdent n'ont été données qu'à titre d'exemple limitatif et que les valeurs numériques, notamment, peuvent changer avec chaque application.

## Revendications

1. Convertisseur multiniveaux comprenant notamment, entre une source de tension (SE) et une source de courant (C), une succession de cellules de commutation commandables (CL1, CL2..., CLn), chacune ayant deux interrupteurs (T1, T'1; T2, T'2...; Tn, T'n), avec un pôle de chacun des deux interrupteurs constituant une paire de pôles amont et l'autre pôle de chacun des interrupteurs contituant une paire de pôles aval, la paire de pôles aval d'une cellule amont étant connectée à la paire de pôles amont d'une cellule aval et la paire de pôles amont d'une première cellule (CL1) étant connectée à ladite source de courant (C), tandis que la paire de pôles aval d'une dernière cellule (CLn) est connectée à ladite source de tension (SE), ce convertisseur comprenant encore un condensateur (C1, C2..., Cn), pour chaque cellule, sauf que celui de la dernière peut être omis quand ladite source de tension (SE) est apte à en jouer le rôle, connecté entre les deux pôles de la paire de pôles aval de la cellule, ainsi que des moyens de commande régissant le fonctionnement nominal du convertisseur en agissant sur les interrupteurs des cellules successives de sorte que les deux interrupteurs d'une même cellule soient toujours respectivement dans des états de conduction opposés, de sorte que, en réponse à un signal de commande de cellule (CT1, CT2..., CTn) fourni par lesdits moyens de commande, l'un des deux interrupteurs d'une même cellule soit successivement dans un premier état de conduction, puis dans un second état de conduction durant une période cycliquement répétée, et de sorte que, en réponse à des signaux de commande de cellules identiques mais décalés dans de temps d'une fraction de ladite période, les interrupteurs des cellules successives aient respectivement le même fonctionnement, mais décalé dans le temps de ladite fraction de période, les condensateurs successifs (C1, C2..., Cn) ayant nominalement des tensions de charge moyennes respectivement croissantes, la tension de charge moyenne nominale du condensateur de chacune desdites cellules étant égale au produit d'une tension (VE) issue de ladite source de tension (SE), par l'inverse du nombre de cellules et par le rang de la cellule, caractérisé en ce qu'il comprend des moyens d'évaluation (VMO1, VMO2..., VMOn) de la tension moyenne aux bornes de chacun des condensateurs (C1, C2..., Cn), des moyens (VE1, VE2..., VEn) pour constater, pour chacun desdits condensateurs (C1, C2..., Cn), un écart éventuel entre la tension de charge moyenne évaluée et la tension de charge moyenne nominale de ce condensateur, ainsi que des moyens de commande complémentaires (MCC1, MCC2..., MCCn) modifiant la durée dudit premier état de conduction de la cellule associée audit condensateur dans un sens tel que ledit écart constaté soit réduit.

2. Convertisseur multiniveaux conforme à la revendication 1, caractérisé en ce que lesdits moyens de constation d'écart (VE1, VE2..., VEn) comprennent chacun des moyens pour recevoir la valeur de la tension (VE) de la source de tension (SE), le rang de l'étage (R) et le nombre d'étages (n), pour déterminer ce que doit être en conséquence la tension de charge nominale de chaque condensateur dans une période de fonctionnement du convertisseur, ledit écart (VE1, VE2..., VEn) étant alors constaté, pour chaque condensateur du convertisseur, par des moyens de comparaison soustrayant ladite tension moyenne évaluée aux bornes de chaque condensateur de ladite tension de charge nominale.

3. Convertisseur multiniveaux conforme à la revendication 2, caractérisé en ce que lesdits moyens d'évaluation (VM1, VM2..., VMn) de la tension aux bornes de chaque condensateur (C1, C2..., Cn) comprennent un réseau voltmétrique (ptk1, ptk2) connecté entre les deux bornes du condensateur.

4. Convertisseur multiniveaux conforme à la revendication 2, caractérisé en ce que lesdits moyens d'évaluation de la tension aux bornes de chaque condensateur comprennent un réseau voltmétrique (VIk) connecté entre les deux bornes d'un interrupteur (Tk) de chaque cellule et un circuit de calcul (CC) dérivant la tension aux bornes de chaque condensateur de la tension VE de la source de tension et des tensions évaluées aux bornes des interrupteurs séparant ce condensateur de la source de tension.

5. Convertisseur multiniveaux conforme à la revendication 2, caractérisé en ce que lesdits moyens d'évaluation de la tension aux bornes de chaque condensateur comprennent un réseau voltmétrique connecté à la source de courant pour déceler sur la tension de sortie les effets d'écarts de charge éventuels, ainsi qu'un dispositif de calcul contenant un modèle du convertisseur et permettant une éva luation de la tension au bornes de chacun des condensateurs.

6. Convertisseur multiniveaux conforme à l'une quelconque des revendications précédentes, caractérisé en ce que chacun desdits moyens de commande complémentaires (MCC1, MCC2..., MCCn) reçoit, outre ledit signal d'écart (VE1, VE2..., VEn), une mesure du courant I imposé par ladite souce de courant et une constante exprimant la capacité d'une desdits condensateurs qui lui est associé, et calcule en conséquence une modification de la durée dudit premier état de conduction de la cellule associée à ce condensateur telle qu'elle engendre dans ce condensateur une charge compensant ledit écart de charge.

7. Convertisseur multiniveaux conforme à l'une quelconque des revendications précédentes, caractérisé en ce que chacun desdits moyens de commande complémentaires (MCC1, MCC2..., MCCn) reçoit, outre ledit signal d'écart (VE1, VE2..., VEn), un signal de modulation M et modifie en conséquence la durée dudit premier état de conduction de la cellule associée à ce condensateur, de sorte que, tous lesdits moyens de commande complémentaires agissant de même, ladite source de courant reçoive une tension moyenne modulée selon ledit signal de modulation.

8. Convertisseur multiniveaux conforme à l'une quelconque des revendications précédentes, caractérisé en ce que chacun desdits moyens de commande complémentaires (MCC1, MCC2..., MCCn) reçoit d'un moyen de commande complémentaire voisin un signal de modification (SM1, SM2..., SMn) établi dans ce dernier et définissant une modification que ce moyen de commande complémentaire voisin apporte à ladite durée dudit premier état de conduction de la cellule qui lui est associée, afin que ledit moyen de commande complémentaire considéré modifie en conséquence ladite durée dudit premier de conduction de la cellule qui lui est propre, dans un sens qui compense our le condensateur associé à cette dernière cellule l'effet de ladite modification apportée dans la cellule voisine.

## Patentansprüche

1. Mehrebenenwandler, der insbesondere zwischen einer Spannungsquelle (SE) und einer Stromquelle (C) eine Folge von steuerbaren Umechaltzellen (CL1, CL2..., CLn) umfasst, die jeweils zwei Unterbrecher (T1, T'1; T2, T'2...; Tn, T'n) aufweisen, wobei ein Pol jedes der beiden Unterbrecher ein stromaufwärtiges Polpaar bildet und der andere Pol jedes der Unterbrecher ein stromabwärtiges Polpaar bildet, wobei das stromabwärtige Polpaar einer stromaufwärtigen Zelle mit dem stromaufwärtigen Polpaar einer stromabwärtigen Zelle verbunden ist und das stromaufwärtige Polpaar einer ersten Zelle (CL1) mit der Stromquelle (C) verbunden ist, während das stromabwärtige Polpaar einer letzten Zelle (CLn) mit der Spannungsquelle (SE) verbunden ist, wobei dieser Wandler noch einen Kondensator (C1, C2..., Cn) für jede Zelle, außer dass derjenige der letzten weggelassen werden kann, wenn die Spannungsquelle (SE) fähig ist, die Rolle zu spielen, der zwischen den beiden stromabwärtigen Polen der Zelle angeschlossen ist, sowie Steuermittel umfasst, die den Nominalbetrieb des Wandlers regeln, indem sie auf die Unterbrecher der aufeinanderfolgenden Zellen wirken, so dass sich die beiden Unterbrecher derselben Zelle immer jeweils in den entgegengesetzten Leistungszuständen befinden, so dass in Antwort auf ein von den Steuermitteln geliefertes zellensteuersignal (CT1, CT2..., CTn) sich der eine der beiden Unterbrecher derselben Zelle während einer zyklisch wiederholten Dauer nacheinander in einem ersten Leitungszustand, dann in einem zweiten Leitungszustand befindet, und so dass in Antwort auf gleiche, aber in der Zeit um einen Bruchteil der Periode versetzte Zellensteuersignale die Unterbrecher der aufeinanderfolgenden Zellen jeweils die gleiche Funktion haben, aber in der Zeit um den Bruchteil der Periode versetzt, wobei die aufeinanderfolgenden Kondensatoren (C1, C2..., Cn) nominal entsprechend wachsende mittlere Ladespannungen haben, wobei die nominale mittlere Ladespannung des Kondensators jeder der Zellen gleich dem Produkt einer von der Spannungsquelle (SE) stammenden Spannung (VE) mit dem Inversen der Anzahl der Zellen und dem Rang der Zelle ist, **dadurch gekennzeichnet,** dass er Mittel (VMO1, VMO2..., VMOn) zur Auswertung der mittleren Spannung an den Anschlussklemmen jedes der Kondensatoren (C1, C2..., Cn), Mittel (VE1, VE2..., VEn), um für jeden der Kondensatoren (C1, C2..., Cn) eine eventuelle Abweichung zwischen der ausgewerteten mittleren Ladespannung und der nominalen mittleren Ladespannung dieses Kondensators festzustellen, sowie komplementäre Steuermittel (MCC1, MCC2..., MCCn) umfasst, die die Dauer des ersten Leitungszustandes der zum Kondensator gehörigen Zelle so in einer Richtung modifizieren, dass die festgestellte Abweichung verringert wird.

2. Mehrebenenwandler nach Anspruch 1, dadurch gekennzeichnet, dass die Mittel (VE1, VE2..., VEn) zur Feststellung einer Abweichung jeweils Mittel aufweisen, um den Wert der Spannung (VE) der Spannungsquelle (SE), den Rang (R) der Stufe und die Anzahl (n) von Stufen zu empfangen, um zu bestimmen, was folglich die nominale Ladungsspannung jedes Kondensators in einer Betriebsperiode des Wandlers sein muss, wobei die Abweichung (VE1, VE2..., VEn) dann für jeden Kondensator des Wandlers durch Vergleichsmittel festgestellt wird, die die an den Anschlussklemmen jedes Kondensators ausgewertete mittlere Spannung von der nominalen Ladespannung subtrahieren.

3. Mehrebenenwandler nach Anspruch 2, dadurch gekennzeichnet, dass die Mittel (VM1, VM2..., VMn) zur Auswertung der Spannung an den Anschlussklemmen jedes Kondensators (C1, C2.., Cn) ein Spannungsmessungsnetz (ptk1, ptk2) umfassen, das zwischen den beiden Anschlussklemmen des Kondensators angeschlossen ist.

4. Mehrebenenwandler nach Anspruch 2, dadurch gekennzeichnet, dass die Mittel zur Auswertung der Spannung an den Anschlussklemmen jedes Kondensators ein Spannungsmessungsnetz (VIk), das zwischen den beiden Anschlussklemmen eines Unterbrechers (Tk) jeder Zelle angeschlossen ist, und eine Rechenschaltung (CC) umfassen, die die Spannung an den Anschlussklemmen jedes Kondensators aus der Spannung VE der Spannungsquelle und den an den Anschlussklemmen der Unterbrecher, die diesen Kondensator von der Spannungsquelle trennen, herleitet.

5. Mehrebenenwandler nach Anspruch 2, dadurch gekennzeichnet, dass die Mittel zur Auswertung der Spannung an den Anschlussklemmen jedes Kondensators ein mit der Stromquelle verbundenes Spannungsmessungsnetz zum Nachweisen der eventuellen Wirkungen der Ladungsabweichung auf die Ausgangsspannung sowie eine Recheneinrichtung umfassen, die ein Modell des Wandlers beinhaltet und eine Auswertung der Spannung an den Anschlussklemmen jedes der Kondensatoren gestattet.

6. Mehrebenenwandler nach einem der vorhergehenden Ansprüche, dadurch gekennzeichnet, dass jedes der komplementären Steuermittel (MCC1, MCC2..., MCCn) außer dem Abweichungssignal (VE1, VE2..., VEn) eine Messung des von der Stromquelle auferlegten Stroms I und eine Konstante empfängt, die die Kapazität eines der Kondensatoren, mit welchem es verbunden ist, ausdrückt, und folglich eine Modifikation der Dauer des ersten Leitungszustandes der zu diesem Kondensator gehörigen Zelle so berechnet, dass sie in diesem Kondensator eine Ladung hervorruft, die die Abweichung der Ladung kompensiert.

7. Mehrebenenwandler nach einem der vorhergehenden Ansprüche, dadurch gekennzeichnet, dass jedes der komplementären Steuermittel (MCC1, MCC2..., MCCn) außer dem Abweichungssignal (VE1, VE2..., VEn) ein Modulationssignal M empfängt und folglich die Dauer des ersten Leitungszustandes der zu diesem Kondensator gehörigen Zelle modifiziert, so dass, wenn alle komplementären Steuermittel ebenso arbeiten, die Spannungsquelle eine gemäß dem Modulationssignal modulierte mittlere Spannung empfängt.

8. Mehrebenenwandler nach einem der vorhergehenden Ansprüche, dadurch gekennzeichnet, dass jedes der komplementären Steuermittel (MCC1, MCC2..., MCCn) von einem benachbarten komplementären Steuermittel ein Modifikationssignal (SM1, SM2..., SMn) empfängt, das in diesem letzteren aufgestellt wurde und eine Modifikation definiert, die dieses benachbarte komplementäre Steuermittel auf die Dauer des ersten Leitungszustandes der Zelle, die zu ihr gehört, anwendet, damit das betrachtete komplementäre Steuermittel folglich die Dauer oder ersten Leitung der Zelle, die ihr eigen ist, in einer Richtung modifiziert, die für den zu dieser letzteren Zelle gehörigen Kondensator die Wirkung der in der benachbarten Zelle angewandten Modifikation kompensiert.

## Claims

1. A multilevel converter comprising, in particular, between a voltage source (SE) and a current source (C), a succession of controllable switching cells (CL1, CL2,..., CLn), each having two switches (T1, T'1; T2, T'2; ...; Tn, T'n), with one pole of each of the two switches forming part of a pair of upstream poles and the other pole of each of the switches forming part of a pair of downstream poles, the pair of downstream poles of an upstream cell being connected to the pair of upstream poles of a downstream cell, and the pair of upstream poles of a first cell (CL1) being connected to said current source (C), while the pair of downstream poles of a last cell (CLn) is connected to said voltage source (SE), the converter also comprising a respective capacitor (C1, C2, ..., Cn) for each cell, except that the capacitor of the last cell may be omitted when said voltage source (SE) is suitable for performing the same role, each capacitor being connected between the two poles constituting the pair of downstream poles of its cell, the converter also comprising control means governing the nominal operation of the converter and acting on the switches of the successive cells in such a manner that the two switches of any one cell are always in respective opposite conduction states, such that in response to a cell control signal (CT1, CT2, ..., CTn) delivered by said control means, one of the two switches in a given cell is successively in a first conduction state and then in a second conduction state during a cyclically repeated converter period, and such that in response to cell control signals that are identical but offset in time by a fraction of said period, the switches of successive cells function respectively in the same manner but offset in time by said fraction of a period, the successive capacitors (C1, C2, ..., Cn) having respective increasing nominal mean charge voltages, the nominal mean charge voltage of the capacitor in each of said cells being equal to the product of a voltage (VE) from said voltage source (SE) multiplied by the reciprocal of the number of cells and by the rank of the cell, the converter being characterized in that it includes means (VMO1, VMO2, ..., VMOn) for evaluating the mean voltage across the terminals of each of the capacitors (C1, C2, ..., Cn), means (VE1, VE2, ..., VEn) for measuring any difference on each of said capacitors (C1, C2, ..., Cn) between the evaluated mean charge voltage and the nominal mean charge voltage of the capacitor, and additional control means (MCC1, MCC2, ..., MCCn) changing the duration of said first conduction state of the cell associated with said capacitor in a direction such that the measured difference is reduced.

2. A multilevel converter according to claim 1, characterized in that each of the difference-measuring means (VE1, VE2, ..., VEn) includes means for receiving the value of the voltage (VE) of the voltage source (SE), the rank of the stage (R) and the number of stages (n) so as to determine what the nominal charge voltage of each capacitor consequently ought to be in an operating period of the converter, said difference (VE1, VE2, .., VEn) then being measured on each capacitor of the converter by comparator means subtracting said mean voltage evaluated across the terminals of each capacitor from said nominal charge voltage.

3. A multilevel converter according to claim 2, characterized in that said means (VM1, VM2, ..., VMn) for evaluating the voltage across the terminals of each capacitor (C1, C2, ..., Cn) comprise a voltmeter network (ptk1, ptk2) connected across the two terminals of the capacitor.

4. A multilevel converter according to claim 2, characterized in that said means for evaluating the voltage across the terminals of each capacitor comprise a voltmeter network (VIk) connected across the two terminals of a switch (Tk) in each cell and a computation circuit (CC) deriving the voltage across the terminals of each capacitor from the voltage VE of the voltage source and from the voltages evaluated across the terminals of the switches separating the capacitor from the voltage source.

5. A multilevel converter according to claim 2, characterized in that said means for evaluating the voltage across the terminals of each capacitor comprise a voltmeter network connected to the current source so as to detect the effects on the output voltage of any charge differences, and a computation circuit containing a model of the converter and making it possible to evaluate the voltage across the terminals of each of the capacitors.

6. A multilevel converter according to any preceding claim, characterized in that each of said additional control means (MCC1, MCC2, ..., MCCn) receives, in addition to said difference signal (VE1, VE2, ..., VEn), a measurement of the current I forced by said current source and a constant expressing the capacitance of one of said capacitors that is associated with it, and computes accordingly a change in the duration of said first conduction state of the cell associated with the capacitor, which change is such that it generates charge in the capacitor compensating for said charge difference.

7. A multilevel converter according to any preceding claim, characterized in that each of said additional control means (MCC1, MCC2, ..., MCCn) receives, in addition to said difference signal (VE1, VE2, ..., VEn), a modulation signal M, and changes accordingly the duration of said first conduction state of the cell associated with the capacitor, so that, with all of said additional control means acting likewise, said current source receives a mean voltage modulated according to said modulation signal.

8. A multilevel converter according to any preceding claim, characterized in that each of said additional control means (MCC1, MCC2, ..., MCCn) receives from an adjacent additional control means a change signal (SM1, SM2 ..., SMn) established therein and defining a change that the adjacent additional control means makes to said duration of said first conduction state of the cell associated with it, so that the additional control means in question changes accordingly said duration of said first conduction state of the cell specific to it, in a direction that compensates, in the capacitor associated with that cell, the effect of said change made in the adjacent cell.
